# EUROPEAN PATENT SPECIFICATION

(11) **EP 3 767 778 B1**
(45) Date of publication and mention of the grant of the patent: **04.10.2023**
(21) Application number: 19767238.9
(22) Date of filing: 05.02.2019
(51) Int. Cl.: H02J 7/00, B60L 50/16, B60L 50/40, B60L 50/50, B60L 53/00, B60L 55/00, B60L 58/00, B62M 23/02, H01M 10/44, H01M 10/48, H02J 7/10, H01M 10/30, H01M 10/42

(54) **BATTERY CONTROL SYSTEM FOR NICKEL-METAL HYDRIDE BATTERY**
BATTERIESTEUERUNGSSYSTEM FÜR NICKEL-METALLHYDRID-AKKUMULATOR
SYSTÈME DE COMMANDE DE BATTERIE NICKEL-HYDRURE MÉTALLIQUE

(30) Priority: 15.03.2018 JP 2018047483
(43) Date of publication of application: 20.01.2021
(73) Proprietor: YAMAHA HATSUDOKI KABUSHIKI KAISHA, Iwata-shi Shizuoka 438-8501 (JP)
(72) Inventor: YAMAMOTO, Kazuki, Iwata-shi, Shizuoka 438-8501 (JP); ITO, Masaki, Iwata-shi, Shizuoka 438-8501 (JP); KONDOH, Kohji, Iwata-shi, Shizuoka 438-8501 (JP)
(74) Representative: Grünecker Patent- und Rechtsanwälte PartG mbB
(86) International application number: PCT/JP2019/004015
(87) International publication number: WO 2019/176377

(56) References cited:
- EP-A1- 2 572 951
- WO-A1-2011/108249
- JP-A- 2000 312 404
- JP-A- 2013 227 017
- US-A1- 2005 248 313
- US-A1- 2017 338 668

## Description

### TECHNICAL FIELD

The present invention relates to a battery control system and a straddled vehicle having the battery control system.

### BACKGROUND ART

EP 2 572 951 A1 discloses a battery control system at least not showing the features of the characterizing portion of claim 1. Further, a vehicle using an internal combustion engine (hereinafter referred to as an "engine") as its power source typically includes a rotating electrical machine installed thereon that generates electric power using the rotation of the engine.

Patent Document Nos. 1 and 2 each disclose a straddled vehicle that uses an electric power-generating rotating electrical machine as a starter motor for driving the crank shaft of the engine at the start of the engine and as an assisting motor for assisting the power of the engine as needed while running.

### CITATION LIST

### PATENT LITERATURE

Patent Document No. 1: Japanese Laid-Open Patent Publication No. 2004-122925
Patent Document No. 2: Japanese Laid-Open Patent Publication No. 2008-24255

### SUMMARY OF INVENTION

### TECHNICAL PROBLEM

One may consider using a nickel-metal hydride battery as the secondary battery of such a rotating electrical machine. A nickel-metal hydride battery is available at relatively low cost, and it is possible to reduce the cost of the vehicle. It is possible to rotate the rotating electrical machine by supplying electric power to the rotating electrical machine from the nickel-metal hydride battery. Moreover, while generating power, the nickel-metal hydride battery can store electric power generated by the rotating electrical machine.

However, a characteristic of a nickel-metal hydride battery is that the charging efficiency lowers when the temperature is high and the output lowers when the temperature is low. A nickel-metal hydride battery also has a problem in that it has hysteresis for the relationship between voltage and SOC (State Of Charge), thereby complicating the charge/discharge control.

With this characteristic of a nickel-metal hydride battery, one may consider, for a nickel-metal hydride battery for use on a vehicle, charging/discharging only over a narrow SOC range (e.g., a 40-60% range) in order to realize a stable charge/discharge control. By limiting the SOC use range to a narrow range, it is possible to realize a stable control that reduces the influence of the lowering of the charging efficiency and the lowering of the output.

On the other hand, in order to make effective use of the performance of a nickel-metal hydride battery, it is desirable to charge/discharge over a wide SOC range.

The present invention provides a battery control system capable of charging/discharging a nickel-metal hydride battery over a wide SOC range, and a straddled vehicle having the battery control system.

### SOLUTION TO PROBLEM

Above problem is solved by a battery control system according to claim 1. A battery control system according to the present invention is a battery control system for controlling charging/discharging of a nickel-metal hydride battery having a hysteresis characteristic for a relationship between voltage and SOC (State Of Charge), the battery control system including: a memory that stores information regarding a plurality of SOC use ranges having different SOC upper and lower limits; and a control circuit that selects one of the plurality of SOC use ranges, and controls charging/discharging of the nickel-metal hydride battery in accordance with the selected SOC use range, wherein the control circuit: receives information regarding a temperature of the nickel-metal hydride battery detected by a temperature sensor; and changes an SOC use range to be selected from among the plurality of SOC use ranges depending on the temperature of the nickel-metal hydride battery.

By changing the SOC use range depending on the temperature of the nickel-metal hydride battery, it is possible to charge/discharge over a wide SOC range. Being able to charge/discharge over a wide SOC range allows to make effective use of the performance of the nickel-metal hydride battery.

Further, the plurality of SOC use ranges include a first use range and a second use range; an SOC upper limit of the first use range is higher than an SOC upper limit of the second use range; and an SOC lower limit of the second use range is lower than an SOC lower limit of the first use range.

By selectively using the first use range having a high SOC upper limit and the second use range having a low SOC lower limit, it is possible to charge/discharge the nickel-metal hydride battery over a wide SOC range.

In one embodiment, the control circuit: may perform a charge/discharge control in accordance with the first use range when the temperature of the nickel-metal hydride battery is a first temperature; and may perform a charge/discharge control in accordance with the second use range when the temperature of the nickel-metal hydride battery is a second temperature higher than the first temperature.

When the temperature of the nickel-metal hydride battery is low, the battery is charged/discharged over a use range such that SOC does not become too low. On the other hand, when the temperature of the nickel-metal hydride battery is high, the battery is charged/discharged over a use range such that SOC does not become too high. Thus, it is possible to suppress the lowering of the output due to the temperature of the nickel-metal hydride battery being low, and to suppress the lowering of the charging efficiency due to the temperature being high.

Further, the control circuit: performs a control such that the nickel-metal hydride battery is discharged to the SOC lower limit of the second use range when changing the SOC use range from the first use range to the second use range; and performs a control such that the nickel-metal hydride battery is charged to the SOC upper limit of the first use range when changing the SOC use range from the second use range to the first use range.

When switching to a lower SOC use range, the nickel-metal hydride battery is discharged to the lower limit of the target use range. When switching to a higher SOC use range, the nickel-metal hydride battery is charged to the upper limit of the target use range. Thus, it is possible to change the SOC use range.

In one embodiment, the plurality of SOC use ranges may further include a third use range; an SOC upper limit of the third use range may be lower than the SOC upper limit of the first use range and higher than the SOC upper limit of the second use range; and an SOC lower limit of the third use range may be lower than the SOC lower limit of the first use range and higher than the SOC lower limit of the second use range.

By selectively using the first, second and third use ranges, it is possible to charge/discharge the nickel-metal hydride battery over a wide SOC range.

In one embodiment, the control circuit: may perform a charge/discharge control in accordance with the first use range when the temperature of the nickel-metal hydride battery is a first temperature; may perform a charge/discharge control in accordance with the second use range when the temperature of the nickel-metal hydride battery is a second temperature higher than the first temperature; and may perform a charge/discharge control in accordance with the third use range when the temperature of the nickel-metal hydride battery is a third temperature higher than the first temperature and lower than the second temperature. Thus, it is possible to charge/discharge over an SOC use range that is suitable for the temperature of the nickel-metal hydride battery.

In one embodiment, the control circuit: may perform a control such that the nickel-metal hydride battery is discharged to the SOC lower limit of the third use range when changing the SOC use range from the first use range to the third use range; may perform a control such that the nickel-metal hydride battery is discharged to the SOC lower limit of the second use range when changing the SOC use range from the third use range to the second use range; may perform a control such that the nickel-metal hydride battery is charged to the SOC upper limit of the third use range when changing the SOC use range from the second use range to the third use range; and may perform a control such that the nickel-metal hydride battery is charged to the SOC upper limit of the first use range when changing the SOC use range from the third use range to the first use range.

When switching to a lower SOC use range, the nickel-metal hydride battery is discharged to the lower limit of the target use range. When switching to a higher SOC use range, the nickel-metal hydride battery is charged to the upper limit of the target use range. Thus, it is possible to change the SOC use range.

In one embodiment, at the time of initial use of the nickel-metal hydride battery, the control circuit may perform a control such that discharging of the nickel-metal hydride battery is started after the nickel-metal hydride battery is charged to the SOC upper limit of the first use range.

By discharging to the SOC lower limit of the second use range and charging to the SOC upper limit of the first use range, there are obtained the discharge curve and the charge curve (a reference discharge curve and a reference charge curve) that connect between the SOC upper limit of the first use range and the SOC lower limit of the second use range.

At the time of initial use of the nickel-metal hydride battery, an upper portion of the charge curve, which is obtained when charging in accordance with the second use range, is off the reference charge curve. While repeating the control of changing the SOC use range depending on the temperature, the charge curve in the second use range moves so that the upper portion comes closer to the reference charge curve. As the charge curve in the second use range moves, it is difficult to precisely determine SOC from the voltage of the nickel-metal hydride battery.

In view of this, at the time of initial use of the nickel-metal hydride battery, the nickel-metal hydride battery is first charged to the SOC upper limit of the first use range. Thus, the upper portion of the charge curve in the second use range can be made to conform to the reference charge curve. The charge curve in the second use range no longer moves after the upper portion thereof conforms to the reference charge curve. As the charge curve in the second use range no longer moves, it is possible to precisely determine SOC from the voltage of the nickel-metal hydride battery.

In one embodiment, at the time of initial use of the nickel-metal hydride battery, the control circuit may perform a control such that discharging of the nickel-metal hydride battery is started after the nickel-metal hydride battery is charged to the SOC upper limit of the first use range, irrespective of the temperature of the nickel-metal hydride battery.

At the time of initial use of the nickel-metal hydride battery, the nickel-metal hydride battery is first charged to the SOC upper limit of the first use range, irrespective of the temperature of the nickel-metal hydride battery. Thus, an upper portion of the charge curve in the second use range can be made to conform to the reference charge curve. The charge curve in the second use range no longer moves after the upper portion thereof conforms to the reference charge curve. As the charge curve in the second use range no longer moves, it is possible to precisely determine SOC from the voltage of the nickel-metal hydride battery.

In one embodiment, the initial use of the nickel-metal hydride battery may be an initial use of the nickel-metal hydride battery after being shipped from factory.

Immediately after starting to use the nickel-metal hydride battery, an upper portion of the charge curve in the second use range can be made to conform to the reference charge curve. As the charge curve in the second use range no longer moves, it is possible to precisely determine SOC from the voltage of the nickel-metal hydride battery.

In one embodiment, the initial use of the nickel-metal hydride battery is an initial use of the nickel-metal hydride battery after replenishing charging of the nickel-metal hydride battery.

Immediately after starting to use the nickel-metal hydride battery after replenishing charging, an upper portion of the charge curve in the second use range can be made to conform to the reference charge curve. As the charge curve in the second use range no longer moves it is possible to precisely determine SOC from the voltage of the nickel-metal hydride battery.

A straddled vehicle according to an embodiment of the present invention includes the battery control system described above. Being able to charge/discharge the nickel-metal hydride battery over a wide SOC range, it is possible to improve the performance of the straddled vehicle.

### ADVANTAGEOUS EFFECTS OF INVENTION

With a battery control system according to an illustrative embodiment of the present invention, the SOC use range is changed depending on the temperature of the nickel-metal hydride battery. Thus, it is possible to charge/discharge over a wide SOC range. Being able to charge/discharge over a wide SOC range, it is possible to make effective use of the performance of the nickel-metal hydride battery.

### BRIEF DESCRIPTION OF DRAWINGS

FIG. **1** is a side view showing a motorcycle according to an embodiment of the present invention.
FIG. **2** is a diagram showing an engine unit according to the embodiment of the present invention.
FIG. **3** is a diagram showing the engine unit according to the embodiment of the present invention.
FIG. **4** is a block diagram showing an engine system according to the embodiment of the present invention.
FIG. **5** is a graph showing a charging/discharging characteristic of a nickel-metal hydride battery according to the embodiment of the present invention.
FIG. **6** is a graph showing an SOC use range that is used when the temperature of the nickel-metal hydride battery according to the embodiment of the present invention is low.
FIG. **7** is a graph showing an SOC use range that is used when the temperature of the nickel-metal hydride battery according to the embodiment of the present invention is medium.
FIG. **8** is a graph showing an SOC use range that is used when the temperature of the nickel-metal hydride battery according to the embodiment of the present invention is high.
FIG. **9** is a flow chart showing the process of changing the SOC use range depending on the temperature of the nickel-metal hydride battery according to the embodiment of the present invention.
FIG. **10** is a graph showing an SOC use range for low temperature, an SOC use range for medium temperature, and an SOC use range for high temperature according to the embodiment of the present invention.
FIG. **11** is a graph showing the charging/discharging characteristic when no time period has elapsed since the nickel-metal hydride battery is first used after being shipped from factory according to the embodiment of the present invention.
FIG. **12** is a graph showing how the charge curve moves according to the embodiment of the present invention.
FIG. **13** is a flow chart showing an initial charge/discharge control of the nickel-metal hydride battery according to the embodiment of the present invention.

### DESCRIPTION OF EMBODIMENTS

An embodiment of the present invention will now be described with reference to the drawings. The same elements are denoted by the same reference signs, and will not be described redundantly. The terms front, rear, up, down, left and right, as used in the description below, refer to these directions as seen from a passenger seated in the seat of the straddled vehicle. Note that the following embodiment is illustrative, and the present invention is not limited to the following embodiment.

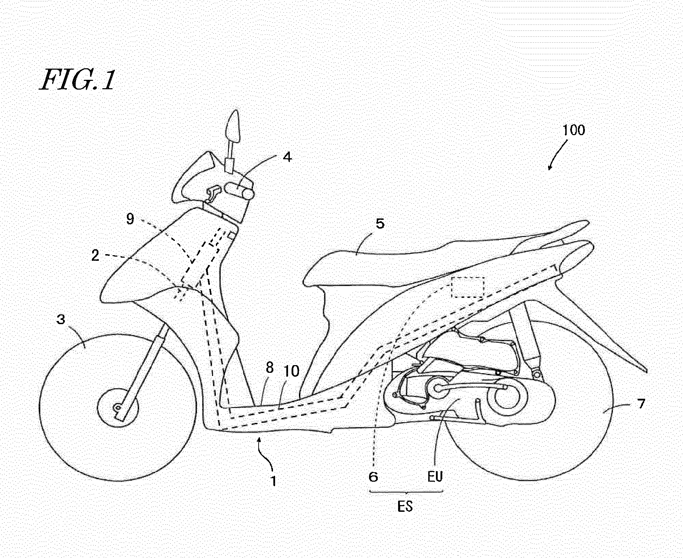

FIG. **1** is a side view showing a motorcycle **100,** which is an example of a straddled vehicle according to the embodiment of the present invention. In the example shown in FIG. **1****,** the straddled vehicle is a scooter-type motorcycle. Note that the straddled vehicle according to the embodiment of the present invention is not limited to a scooter-type motorcycle as illustrated herein. The straddled vehicle according to the embodiment of the present invention may be a motorcycle of any other type such as on-road type, off-road type and moped type. The straddled vehicle according to the embodiment of the present invention refers to any vehicle that is straddled by a passenger and is not limited to a two-wheeled vehicle. The straddled vehicle according to the embodiment of the present invention may be a three-wheeled vehicle of which the direction of travel is changed by leaning the vehicle body (LMW), or the like, or may be any other straddled vehicle such as an ATV (All Terrain Vehicle).

The motorcycle **100** includes a rotating electrical machine that functions as a starter/electric generator. The rotating electrical machine generates electric power using the rotation. The rotating electrical machine is used as a starter motor for driving the crank shaft of the engine at the start of the engine, and also as an assisting motor for assisting the power of the engine while running. The rotating electrical machine functioning as an assisting motor may be referred to herein simply as a "motor" herein.

The motorcycle **100** shown in FIG. **1** includes a body frame **10** including a head pipe **9,** a handle **4** supported on the head pipe **9,** a seat **5** provided rearward of the handle **4,** and a leg space **8** that is provided between the handle **4** and the seat **5** and is used by the rider to rest his/her feet thereon.

The head pipe **9** supports a front fork **2** so that the front fork **2** can swivel left and right. The handle **4** is attached to the upper end of the front fork **2,** and a front wheel **3** is rotatably attached to the lower end of the front fork **2.**

The seat **5** is provided on an upper portion of generally the center of the body **1.** An ECU (Engine Control Unit) **6** and an engine unit **EU** are provided under the seat **5.** The ECU **6** and the engine unit **EU** together form the engine system **ES.** A rear wheel **7** is rotatably attached to a lower portion of the rear end of the body **1.** The rear wheel **7** is driven by the power generated by the engine unit **EU.**

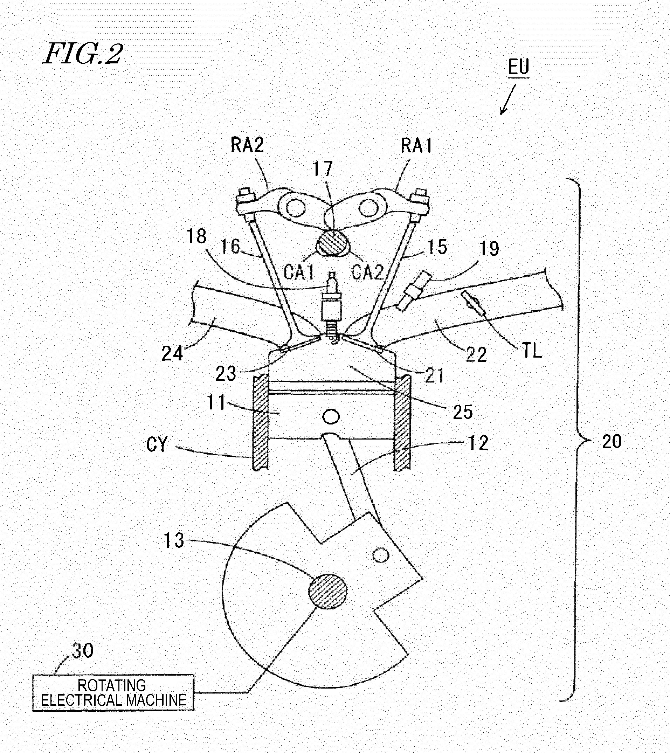

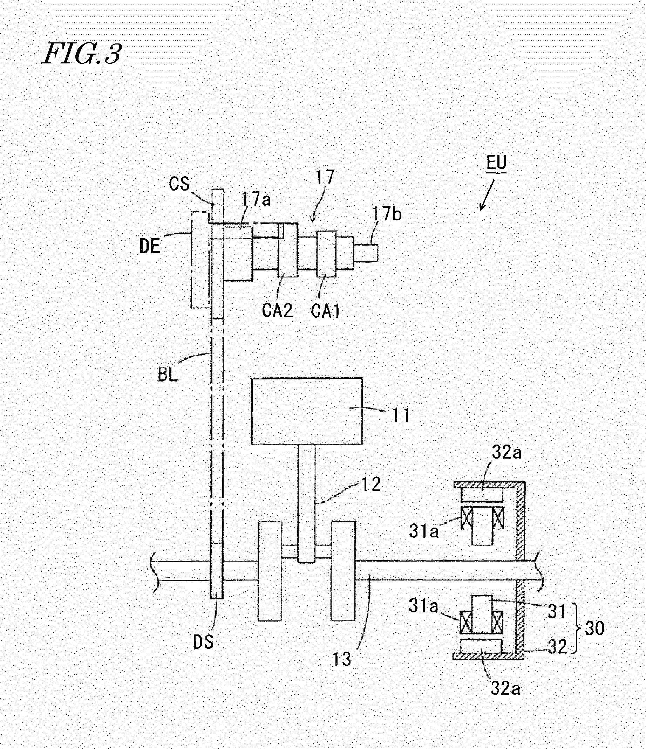

FIG. **2** and FIG. **3** are schematic diagrams of the engine unit **EU.** As shown in FIG. **2****,** the engine unit **EU** includes an engine **20** and a rotating electrical machine **30.** The rotating electrical machine **30** functions as a starter/electric generator. FIG. **2** and FIG. **3** show a 4-stroke single-cylinder engine as an example of the engine **20.** The engine **10** includes a cylinder **CY,** a piston **11,** a conrod (connecting rod) **12,** a crank shaft **13,** an intake valve **15,** an exhaust valve **16,** a cam shaft **17,** an ignitor **18** and an injector **19.**

The piston **11** is reciprocally provided in the cylinder **CY,** and is connected to the crank shaft **13** via the conrod **12.** The cylinder **CY** and the piston **11** together define a combustion chamber **25.** The combustion chamber **25** communicates with an intake passageway **22** via an intake port **21,** and communicates with an exhaust passageway **24** via an exhaust port **23.** The intake valve **15** is provided so as to open/close the intake port **21,** and the exhaust valve **16** is provided so as to open/close the exhaust port **23.** The throttle valve **TL** is provided along the intake passageway **22** for adjusting the flow rate of the air to be guided into the combustion chamber **25.** The opening of the throttle valve **TL** is adjusted by operating the accelerator grip (not shown) provided on the handle **4** (FIG. **1**).

The injector **19** is configured to inject fuel into the intake passageway **22.** The ignitor **18** is configured to ignite the fuel mixture in the combustion chamber **25.** Fuel injected by the injector **19** is mixed with the air and guided into the combustion chamber **25,** and the fuel mixture is ignited in the combustion chamber **25** by the ignitor **18.** The combustion of the fuel mixture drives the piston **11,** and the reciprocation of the piston **11** is converted into the rotation of the crank shaft **13.** The torque of the crank shaft **13** is transmitted to the rear wheel **7** of FIG. **1****,** thereby driving the rear wheel **7.**

The cam shaft **17** is provided so as to rotate together with the rotation of the crank shaft **13.** Rocker arms **RA1** and **RA2** are provided in contact with the cam shaft **17** so that they can swivel. The cam shaft **17** drives the intake valve **15** via the rocker arm **RA1,** and the exhaust valve **16** via the rocker arm **RA2.**

As shown in FIG. **3****,** a cam sprocket **CS** is provided at one end of the cam shaft **17.** A cam shaft drive sprocket **DS** is provided on the crank shaft **13.** A belt **BL** is wound between the cam sprocket **CS** and the cam shaft drive sprocket **DS.** The torque of the crank shaft **13** is transmitted to the cam shaft **17** via the belt **BL.** The rotation speed of the cam shaft **17** is 1/2 the rotation speed of the crank shaft **13,** for example.

The cam shaft **17** has cam journals **17a** and **17b,** an intake cam **CA1** and an exhaust cam **CA2.** The cam journal **17a** is arranged so as to be next to the cam sprocket **CS,** and the cam journal **17b** is arranged at the other end of the cam shaft **17.** The cam journals **17a** and **17b** are each held by a bearing (not shown). The intake cam **CA1** and the exhaust cam **CA2** are provided between the cam journals **17a** and **17b.** The intake cam **CA1** is provided so as to be next to the cam journal **17b,** and the exhaust cam **CA2** is provided so as to be next to the cam journal **17a.** The intake cam **CA1** drives the rocker arm **RA1** of FIG. **2** when the crank angle (rotational position of the crank shaft **13**) is within an angle range corresponding to the intake cycle. The exhaust cam **CA2** drives the rocker arm **RA2** of FIG. **2** when the crank angle is within an angle range corresponding to the exhaust cycle.

A decompression mechanism **DE** is provided on the cam shaft **17.** The decompression mechanism **DE** lifts the exhaust valve **16,** independently of the exhaust cam **CA2,** to lower the pressure in the cylinder **CY.** The decompression mechanism is known in the art, and will not be described below.

The rotating electrical machine **30** includes a stator **31** and a rotor **32.** The stator **31** is secured on a crank case (not shown), and includes a plurality of stator coils **31a** of U, V and W phases. The stator coils **31a** are arranged along a circle that is centered about the rotational center of the crank shaft **13.** The rotor **32** is secured on the crank shaft **13** so as to surround the stator **31.** The rotor **32** includes a plurality of permanent magnets **32a.** The plurality of permanent magnets **32a** are arranged along a circle that is centered about the rotational center of the crank shaft **13.** The rotating electrical machine **30** is capable of driving the crank shaft **13** using the electric power supplied from a nickel-metal hydride battery to be described below. The rotating electrical machine **30** can generate electric power from the rotation transmitted from the crank shaft **13.** The nickel-metal hydride battery can be charged using the generated electric power. Note that a starter motor and a generator may be provided separately instead of the rotating electrical machine **30.**

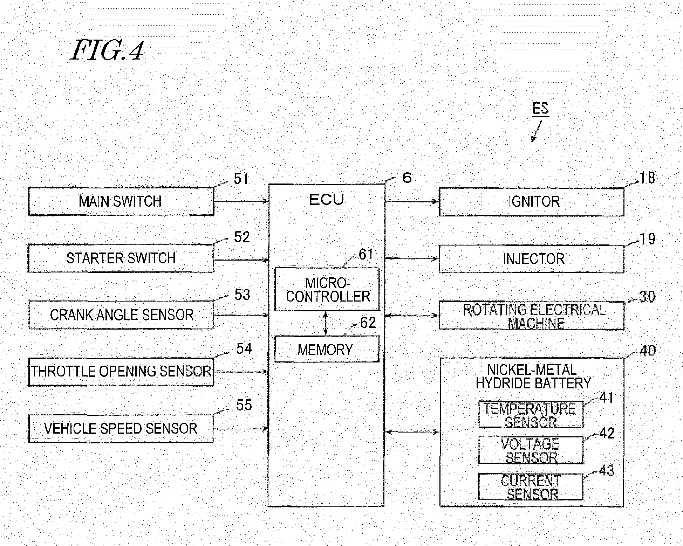

FIG. **4** is a block diagram showing the engine system **ES.** The engine system **ES** operates by using electric power stored in a nickel-metal hydride battery **40** and electric power generated by the rotating electrical machine **30,** for example. The engine system **ES** may include a battery for its operation, separately from the nickel-metal hydride battery **40.**

The engine system **ES** includes a crank angle sensor **53,** a throttle opening sensor **54** and a vehicle speed sensor **55.** The ECU **6** can detect various states of the motorcycle **100** by using the outputs from these sensors.

The crank angle sensor **53** is a sensor for detecting the crank angle. By detecting the crank angle, it is possible to obtain the rotation speed (e.g., the number of revolutions per minute, rpm) of the engine **20.** The throttle opening sensor **54** detects the opening of the throttle valve **TL** of FIG. **2****.** The vehicle speed sensor **55** detects the running speed (vehicle speed) of the motorcycle **100.** The crank angle sensor **53,** the throttle opening sensor **54** and the vehicle speed sensor **55** each output a detection signal in accordance with the detection results to the ECU **6.**

A main switch **51** and a starter switch **52** are provided on the handle **4** (FIG. **1**), for example. Operation signals in accordance with the rider's operation of the main switch **51** and the starter switch **52** are output to the ECU **6.**

The nickel-metal hydride battery **40** is provided with a temperature sensor **41,** a voltage sensor **42** and a current sensor **43.** The temperature sensor **41** detects the temperature of the nickel-metal hydride battery **40.** The temperature sensor **41** may be any temperature sensor, e.g., a thermistor, a thermocouple, etc. The voltage sensor **42** detects the terminal voltage of the nickel-metal hydride battery **40.** The current sensor **43** detects the current flowing through the nickel-metal hydride battery **40.** The temperature sensor **41,** the voltage sensor **42** and the current sensor **43** each output a detection signal in accordance with the detection results to the ECU **6.**

The ECU **6** includes a microcontroller **61** and a memory **62,** for example. The microcontroller **61** is an example of a control circuit. Based on detection signals and operation signals given thereto, the ECU **6** controls the ignitor **18,** the injector **19,** the rotating electrical machine **30** and the nickel-metal hydride battery **40.**

For example, when the main switch **51** is turned ON and the starter switch **52** is turned ON, the ECU **6** actuates the rotating electrical machine **30** to drive the crank shaft **13** of the engine **20.** Thus, the engine **20** starts. The start of the engine **20** refers to the start of the combustion of a fuel mixture when the fuel injection by the injector **19** and the ignition by the ignitor **18** start.

When the motorcycle **100** stops and the main switch **51** is turned OFF, the engine **20** stops. The stopping of the engine **20** refers to the discontinuation of the combustion of a fuel mixture following the discontinuation of at least one of the fuel injection by the injector **19** and the ignition by the ignitor **18.**

The ECU **6** of the present embodiment serves also as a battery control system for controlling the charging and discharging of the nickel-metal hydride battery **40.** The control of the charging and discharging depending on the temperature of the nickel-metal hydride battery **40** will now be described. Note that the various numerical values shown below are illustrative, and the present invention is not limited to those numerical values.

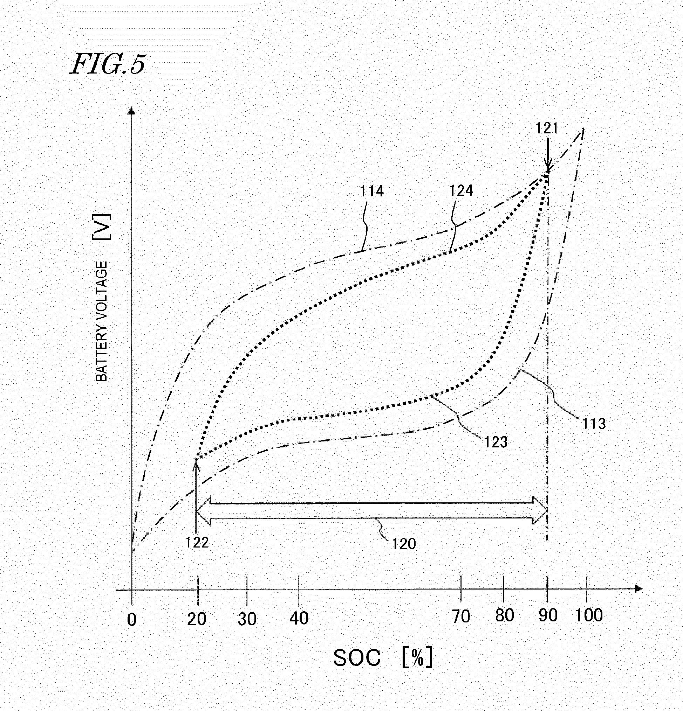

FIG. **5** is a graph showing a charging/discharging characteristic of the nickel-metal hydride battery **40.** The vertical axis of FIG. **5** shows battery voltage, and the horizontal axis thereof shows SOC (State Of Charge).

Battery voltage shown on the vertical axis is the open circuit voltage (OCV), for example. For example, the microcontroller **61** can calculate the open circuit voltage by using the voltage value and the current value obtained from the voltage sensor **42** and the current sensor **43.** Any of various methods known in the art can be used as the method for calculating the open circuit voltage, which will not be herein described in detail. Note that it is possible to perform the control process of the present embodiment also by using the closed circuit voltage (CCV) instead of the open circuit voltage. SOC shown on the horizontal axis represents, in percentage, the amount of electricity currently charged relative to the capacity of the battery.

A discharge curve **113** shows the relationship between battery voltage and SOC when the nickel-metal hydride battery **40** is discharged from 100% SOC to 0% SOC. A charge curve **114** shows the relationship between battery voltage and SOC when the nickel-metal hydride battery **40** is charged from 0% SOC to 100% SOC.

A discharge curve **123** shows the relationship between battery voltage and SOC when the nickel-metal hydride battery **40** is discharged from 90% SOC to 20% SOC. A charge curve **124** shows the relationship between battery voltage and SOC when the nickel-metal hydride battery **40** is charged from 20% SOC to 90% SOC.

The memory **62** stores discharge curves, charge curves and SOC use ranges. The microcontroller **61** can obtain SOC from battery voltage by using a discharge curve and a charge curve read out from the memory **62.**

FIG. **5** shows an SOC use range **120.** In the illustrated example, SOC is 90% at an upper limit **121** of the SOC use range **120** and 20% at a lower limit **122** thereof. When the nickel-metal hydride battery **40** is charged until SOC reaches 90% and then discharged, the nickel-metal hydride battery **40** is discharged in accordance with the relationship between battery voltage and SOC along the discharge curve **123.** While discharging, the microcontroller **61** uses the output of the nickel-metal hydride battery **40** for the operation of various components of the engine system **ES.** For example, electric power stored in the nickel-metal hydride battery **40** is consumed by performing a control such that the rotating electrical machine **30** generates output for assisting the engine **20** while the vehicle is running.

When the nickel-metal hydride battery **40** is discharged until SOC reaches 20% and then charged, the nickel-metal hydride battery **40** is charged in accordance with the relationship between battery voltage and SOC along the charge curve **124.** While charging, the microcontroller **61** performs a control such that electric power generated by the rotating electrical machine **30** is supplied to the nickel-metal hydride battery **40.** Thus, the nickel-metal hydride battery **40** can be charged.

As shown in FIG. **5****,** the nickel-metal hydride battery **40** has a hysteresis characteristic wherein the discharge curve and the charge curve are significantly different from each other. The hysteresis characteristic of the nickel-metal hydride battery **40** complicates the charge/discharge control. Moreover, the nickel-metal hydride battery **40** has a characteristic such that the charging efficiency lowers when the temperature is high and the output lowers when the temperature is low. Therefore, it is not easy to realize stable charging/discharging over a wide SOC use range (e.g., an SOC range from 20% to 90%).

In view of this, when controlling the charging/discharging of the nickel-metal hydride battery **40** of the present embodiment, a plurality of SOC use ranges having different SOC upper and lower limits are selectively used depending on the temperature of the nickel-metal hydride battery **40.**

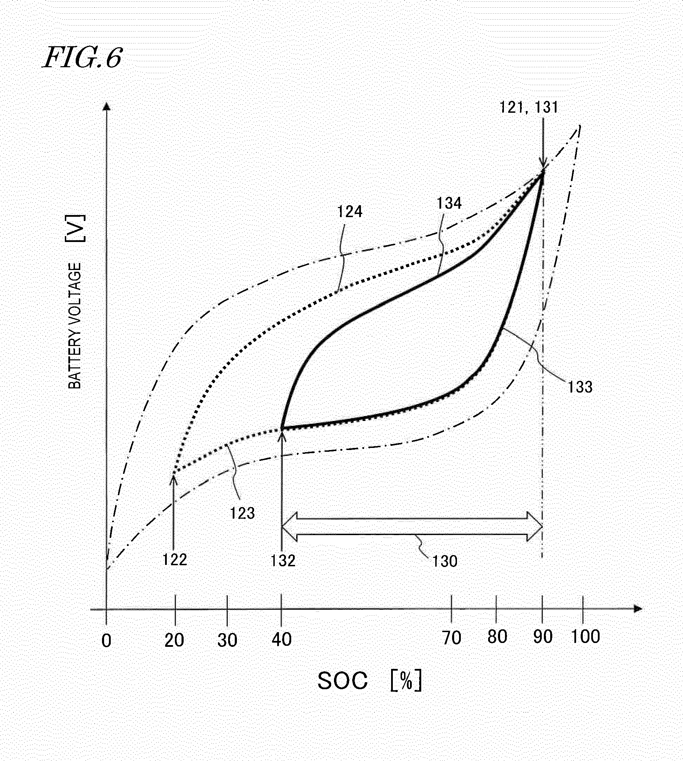

FIG. **6** is a graph showing an SOC use range **130** used when the temperature of the nickel-metal hydride battery **40** is low. The vertical axis of FIG. **6** shows battery voltage, and the horizontal axis thereof shows SOC. The temperature of the nickel-metal hydride battery **40** being low means that the temperature of the nickel-metal hydride battery **40** is less than 10°C, for example.

In the example shown in FIG. **6****,** SOC is 90% at an upper limit **131** of the SOC use range **130** and 40% at a lower limit **132** thereof. The nickel-metal hydride battery **40** has a characteristic such that the output lowers when the temperature is low. Therefore, when the temperature of the nickel-metal hydride battery **40** is low, the nickel-metal hydride battery **40** is charged/discharged over a use range such that SOC does not become too low. When the temperature is low, the microcontroller **61** controls the charging/discharging over the SOC use range **130,** which is a high value range. Thus, it is possible to suppress the lowering of the output due to the temperature of the nickel-metal hydride battery **40** being low, and to realize stable charging/discharging. A discharge curve **133** shows the relationship between battery voltage and SOC when the nickel-metal hydride battery **40** is discharged from 90% SOC to 40% SOC. A charge curve **134** shows the relationship between battery voltage and SOC when the nickel-metal hydride battery **40** is charged from 40% SOC to 90% SOC.

Note that the lower limit of low temperature is the lower limit temperature at which the nickel-metal hydride battery **40** is usable, for example. For example, when the lower limit temperature at which the nickel-metal hydride battery **40** is usable is -20°C, the lower limit of low temperature is -20°C.

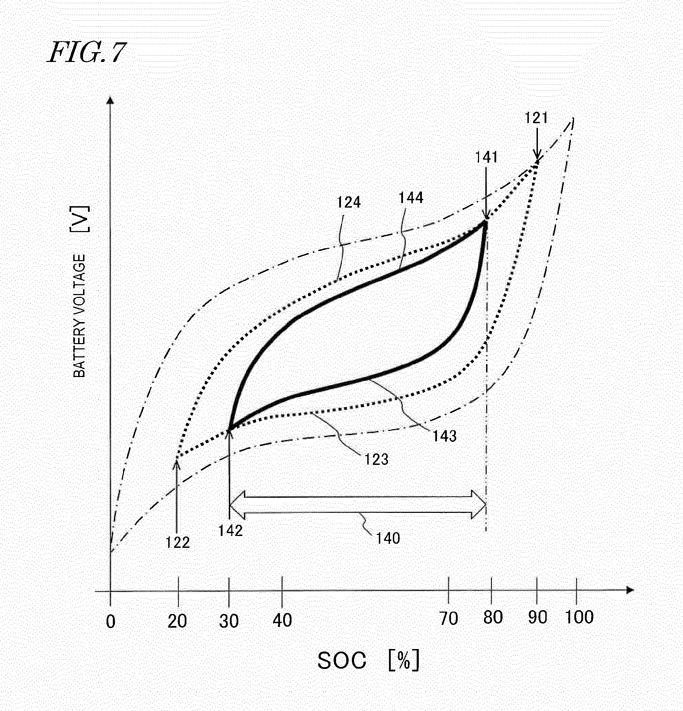

FIG. **7** is a graph showing an SOC use range **140** used when the temperature of the nickel-metal hydride battery **40** is medium. The vertical axis of FIG. **7** shows battery voltage, and the horizontal axis thereof shows SOC. The temperature of the nickel-metal hydride battery **40** being medium means that the temperature of the nickel-metal hydride battery **40** is 10°C or more and less than 40°C, for example.

A lower limit **142** of the SOC use range **140** shown in FIG. **7** is lower than the SOC lower limit **132** of the SOC use range **130** shown in FIG. **6****.** The upper limit **131** of the SOC use range **130** shown in FIG. **6** is higher than an upper limit **141** of the SOC use range **140** shown in FIG. **7****.**

In the example shown in FIG. **7****,** SOC is 80% at an upper limit **141** of the SOC use range **140** and 30% at the lower limit **142** thereof. When the temperature is medium, the microcontroller **61** controls the charging/discharging over the SOC use range **140.** A discharge curve **143** shows the relationship between battery voltage and SOC when the nickel-metal hydride battery **40** is discharged from 80% SOC to 30% SOC. A charge curve **144** shows the relationship between battery voltage and SOC when the nickel-metal hydride battery **40** is charged from 30% SOC to 80% SOC.

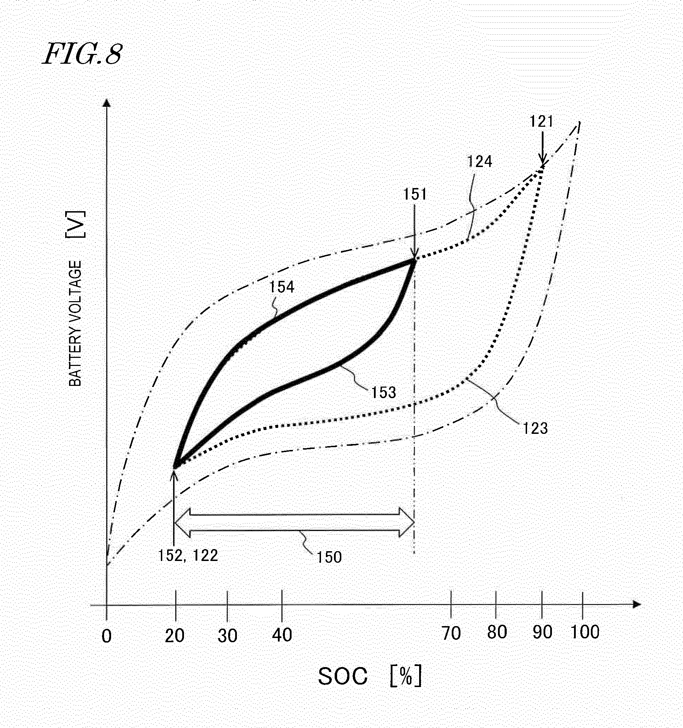

FIG. **8** is a graph showing an SOC use range **150** that is used when the temperature of the nickel-metal hydride battery **40** is high. The vertical axis of FIG. **8** shows battery voltage, and the horizontal axis thereof shows SOC. The temperature of the nickel-metal hydride battery **40** being high means that the temperature of the nickel-metal hydride battery **40** is 40°C or more, for example.

A lower limit **152** of the SOC use range **150** shown in FIG. **8** is lower than the SOC lower limit **142** of the SOC use range **140** shown in FIG. **7****.** The upper limit **141** of the SOC use range **140** shown in FIG. **7** is higher than an upper limit **151** of the SOC use range **150** shown in FIG. **8****.**

In the example shown in FIG. **8****,** SOC is 60% at the upper limit **151** of the SOC use range **150** and 20% at the lower limit **152** thereof. The nickel-metal hydride battery **40** has a characteristic such that the charging efficiency lowers when the temperature is high. In other words, when the temperature is high, it is difficult to charge until SOC reaches a high value. Therefore, when the temperature of the nickel-metal hydride battery **40** is high, the nickel-metal hydride battery **40** is charged/discharged over a use range such that SOC does not become too high. When temperature is high, the microcontroller **61** controls the charging/discharging over the SOC use range **150,** which is a low value range. It is possible to realize stable charging/discharging by suppressing the lowering of the charging efficiency due to the temperature being high. A discharge curve **153** shows the relationship between battery voltage and SOC when the nickel-metal hydride battery **40** is discharged from 60% SOC to 20% SOC. A charge curve **154** shows the relationship between battery voltage and SOC when the nickel-metal hydride battery **40** is charged from 20% SOC to 60% SOC.

Note that the upper limit of high temperature is the upper limit temperature at which the nickel-metal hydride battery **40** is usable, for example. For example, when the upper limit temperature at which the nickel-metal hydride battery **40** is usable is 60°C, the upper limit of high temperature is 60°C.

The memory **62** (FIG. **4**) stores, in advance, information regarding a plurality of SOC use ranges having different SOC upper and lower limits as described above. The microcontroller **61** reads out information regarding SOC use ranges from the memory **62,** and sets a desired SOC use range.

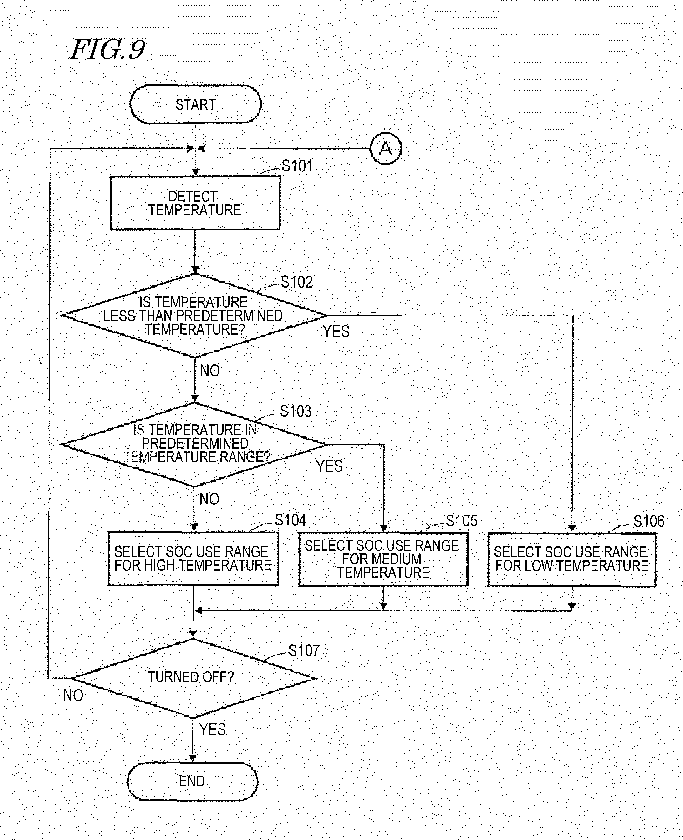

FIG. **9** is a flow chart showing the process of changing the SOC use range depending on the temperature of the nickel-metal hydride battery **40.**

In step S101, the microcontroller **61** detects the temperature of the nickel-metal hydride battery **40** from the output signal of the temperature sensor **41.** In step S102, the microcontroller **61** determines whether the temperature of the nickel-metal hydride battery **40** is less than a predetermined temperature. The predetermined temperature is 10°C, for example. When it is determined that the temperature of the nickel-metal hydride battery **40** is less than the predetermined temperature, the microcontroller **61** selects the SOC use range **130** for low temperature (step S106). The microcontroller **61** controls the charging/discharging of the nickel-metal hydride battery **40** within the selected SOC use range **130.**

In step S102, when it is determined that the temperature of the nickel-metal hydride battery **40** is not less than the predetermined temperature, the process proceeds to the process of step S103. In step S103, the microcontroller **61** determines whether the temperature of the nickel-metal hydride battery **40** is in a predetermined temperature range. The predetermined temperature range is 10°C or more and less than 40°C, for example. When it is determined that the temperature of the nickel-metal hydride battery **40** is in the predetermined temperature range, the microcontroller **61** selects the SOC use range **140** for medium temperature (step S105). The microcontroller **61** controls the charging/discharging of the nickel-metal hydride battery **40** within the selected SOC use range **140.**

In step S103, when it is determined that the temperature of the nickel-metal hydride battery **40** is not in the predetermined temperature range, the microcontroller **61** selects the SOC use range **150** for high temperature (step S104). The microcontroller **61** controls the charging/discharging of the nickel-metal hydride battery **40** within the selected SOC use range **150.**

While the power of the vehicle is ON (No in step S107), the process continues to detect the temperature. When there is no change in the temperature range of the nickel-metal hydride battery **40,** the SOC use range currently selected is maintained. In the process of step S102 or S103, when there is a change in the temperature range, the SOC use range is changed in accordance with the latest temperature. For example, when the temperature of the nickel-metal hydride battery **40** changes to 10°C or more and less than 40°C while performing a control using the SOC use range **130** for low temperature, the microcontroller **61** changes the SOC use range **130** for low temperature to the SOC use range **140** for medium temperature. For example, when the temperature of the nickel-metal hydride battery **40** changes to 40°C or more while performing a control using the SOC use range **140** for medium temperature, the microcontroller **61** changes the SOC use range **140** for medium temperature to the SOC use range **150** for high temperature.

When the power of the vehicle is turned OFF (YES in step S107), the process ends.

As described above, in the present embodiment, the process changes the SOC use range to be selected from among a plurality of SOC use ranges depending on the temperature of the nickel-metal hydride battery **40.**

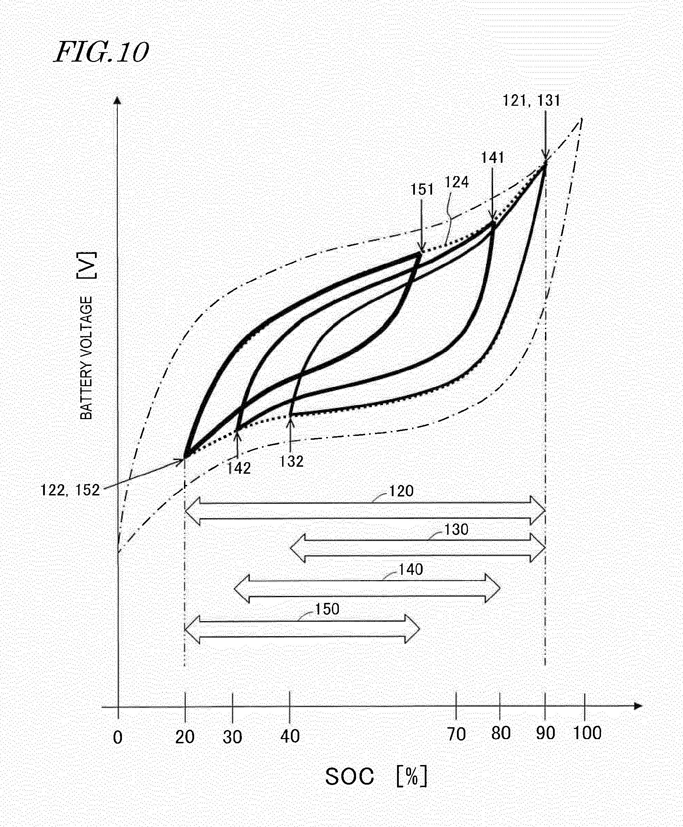

FIG. **10** is a graph showing the SOC use range **130** for low temperature, the SOC use range **140** for medium temperature, and the SOC use range **150** for high temperature. The vertical axis of FIG. **10** shows battery voltage, and the horizontal axis thereof shows SOC. By changing the SOC use range depending on the temperature of the nickel-metal hydride battery **40,** it is possible to charge/discharge over a wide SOC range. For example, it is possible to charge/discharge over a range from 20% to 90%, which corresponds to the wide SOC use range **120.** Being able to charge/discharge over a wide SOC range, it is possible to make effective use of the performance of the nickel-metal hydride battery **40.**

Now, a method for changing the SOC use range will be described. When the SOC use range is changed from the SOC use range **130** for low temperature to the SOC use range **140** for medium temperature, the microcontroller **61** performs a control of discharging the nickel-metal hydride battery **40** to the lower limit **142** of the SOC use range **140** for medium temperature. After reaching the lower limit **142,** the charging of the nickel-metal hydride battery **40** is started. Thus, it is possible to change the SOC use range from the SOC use range **130** for low temperature to the SOC use range **140** for medium temperature.

When the SOC use range is changed from the SOC use range **140** for medium temperature to the SOC use range **150** for high temperature, the microcontroller **61** performs a control of discharging the nickel-metal hydride battery **40** to the lower limit **152** of the SOC use range **150** for high temperature. After reaching the lower limit **152,** the charging of the nickel-metal hydride battery **40** is started. Thus, it is possible to change the SOC use range from the SOC use range **140** for medium temperature to the SOC use range **150** for high temperature.

Thus, when switching to a lower SOC use range, the nickel-metal hydride battery **40** is discharged to the lower limit of the target use range. Thus, it is possible to change the SOC use range.

Similarly, when the SOC use range is changed from the SOC use range **130** for low temperature to the SOC use range **150** for high temperature, the microcontroller **61** performs a control of discharging the nickel-metal hydride battery **40** to the lower limit **152** of the SOC use range **150** for high temperature. After reaching the lower limit **152,** the charging of the nickel-metal hydride battery **40** is started. Thus, it is possible to change the SOC use range from the SOC use range **130** for low temperature to the SOC use range **150** for high temperature.

When the SOC use range is changed from the SOC use range **150** for high temperature to the SOC use range **140** for medium temperature, the microcontroller **61** performs a control of charging the nickel-metal hydride battery **40** to the upper limit **141** of the SOC use range **140** for medium temperature. After reaching the upper limit **141,** the discharging of the nickel-metal hydride battery **40** is started. Thus, it is possible to change the SOC use range from the SOC use range **150** for high temperature to the SOC use range **140** for medium temperature.

When the SOC use range is changed from the SOC use range **140** for medium temperature to the SOC use range **130** for low temperature, the microcontroller **61** performs a control of charging the nickel-metal hydride battery **40** to the upper limit **131** of the SOC use range **130** for low temperature. After reaching the upper limit **131,** the discharging of the nickel-metal hydride battery **40** is started. Thus, it is possible to change the SOC use range from the SOC use range **140** for medium temperature to the SOC use range **130** for low temperature.

Thus, when switching to a higher SOC use range, the nickel-metal hydride battery **40** is charged to the upper limit of the target use range. Thus, it is possible to change the SOC use range.

Similarly, when the SOC use range is changed from the SOC use range **150** for high temperature to the SOC use range **130** for low temperature, the microcontroller **61** performs a control of charging the nickel-metal hydride battery **40** to the upper limit **131** of the SOC use range **130** for low temperature. After reaching the upper limit **131,** the discharging of the nickel-metal hydride battery **40** is started. Thus, it is possible to change the SOC use range from the SOC use range **150** for high temperature to the SOC use range **130** for low temperature.

Next, the process of initially discharging the nickel-metal hydride battery **40** will be described. The initial discharging of the nickel-metal hydride battery **40** refers to the initial discharging of the nickel-metal hydride battery **40** after being shipped from factory, for example.

FIG. **10** described above shows a charging/discharging characteristic after a certain time period has elapsed since the nickel-metal hydride battery **40** is first used after being shipped from factory. For example, the figure shows a charging/discharging characteristic that is realized after repeating the control of changing the SOC use range depending on the temperature. In the example shown in FIG. **10****,** the relationship between battery voltage and SOC at the upper limit **151** of the SOC use range **150** is along the charge curve **124.** The relationship between battery voltage and SOC at the upper limit **141** of the SOC use range **140** is along the charge curve **124.**

The charge curve **124** is a charge curve that is obtained by charging from the lower limit **152** of the SOC use range **150** to the upper limit **131** of the SOC use range **130.** By discharging to the lower limit **152** of the SOC use range **150** and charging to the upper limit **131** of the SOC use range **130,** there are obtained the discharge curve **123** and the charge curve **124** (a reference discharge curve and a reference charge curve) that connect between the upper limit **131** of the SOC use range **130** and the lower limit **152** of the SOC use range **150.**

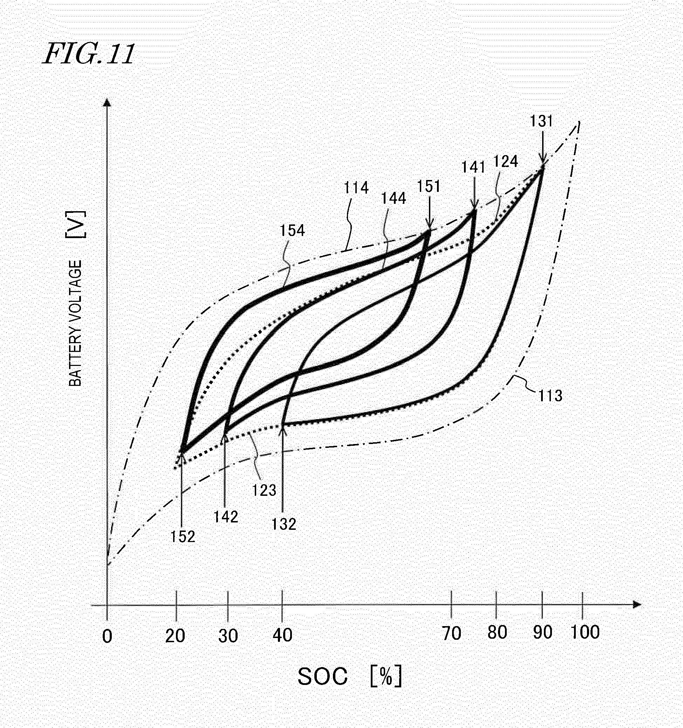

FIG. **11** is a graph showing the charging/discharging characteristic when no time period has elapsed since the nickel-metal hydride battery **40** is first used after being shipped from factory. The vertical axis of FIG. **11** shows battery voltage, and the horizontal axis thereof shows SOC.

In the example shown in FIG. **11****,** the relationship between battery voltage and SOC at the upper limit **151** of the SOC use range **150** is off the charge curve **124.** Moreover, the relationship between battery voltage and SOC at the upper limit **141** of the SOC use range **140** is off the charge curve **124.** The charge curves **144** and **154** for the SOC use ranges **140** and **150** move while repeating the control of changing the SOC use range depending on the temperature.

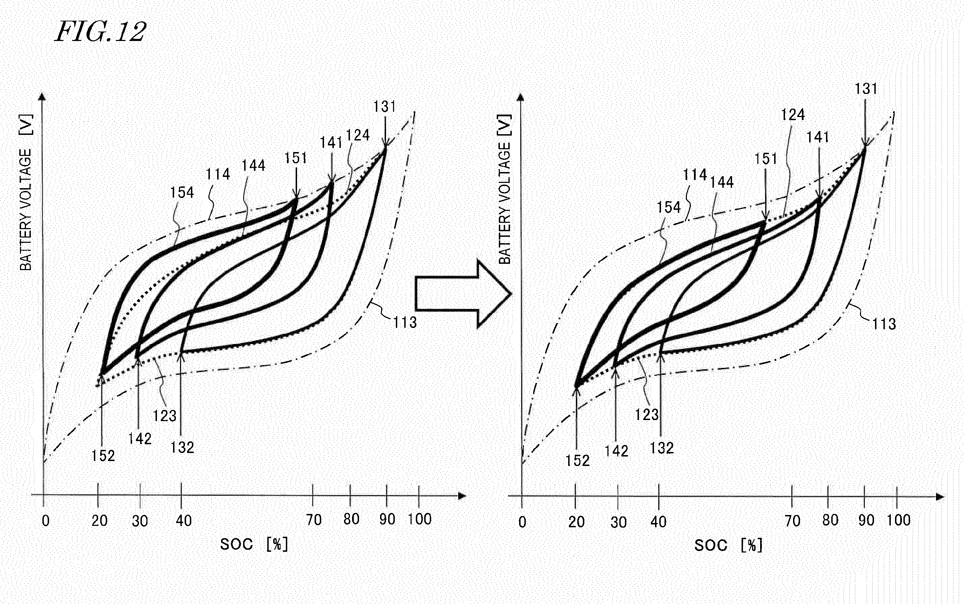

FIG. **12** shows how the charge curves **144** and **154** for the SOC use ranges **140** and **150** move. The left graph of FIG. **12** shows the charging/discharging characteristic of the nickel-metal hydride battery **40** immediately after being shipped from factory. The right graph of FIG. **12** shows the charging/discharging characteristic after the charge curves **144** and **154** have moved. The vertical axis of FIG. **12** shows battery voltage, and the horizontal axis thereof shows SOC.

As shown in FIG. **12****,** the nickel-metal hydride battery **40** exhibits different charging/discharging characteristics depending on the state of charge. For example, the nickel-metal hydride battery **40** having been charged to the upper limit **151** of the SOC use range **150** has the charge curve **154** that is based on the upper limit **151.** For example, the nickel-metal hydride battery **40** having been charged to the upper limit **141** of the SOC use range **140** has the charge curve **144** that is based on the upper limit **141.** While repeating the control of changing the SOC use range depending on the temperature, the charge curves **144** and **154** move closer to the charge curve **124** that is based on the upper limit **131.** If the charge curves **144** and **154** move as described above during use, it is difficult to precisely determine SOC from the voltage of the nickel-metal hydride battery **40.**

In view of this, in the present embodiment, the nickel-metal hydride battery **40** is charged to the upper limit **131** of the SOC use range **130** at the time of initial charge/discharge. The upper limit **131** is equal to the upper limit **121.** Where the nickel-metal hydride battery **40** has been self-discharged at the time of initial charge/discharge, the nickel-metal hydride battery **40** is charged, from the self-discharged state, to the upper limit **131** of the SOC use range **130** during the initial charge/discharge. Thereafter, the SOC use range is changed depending on the temperature. By first performing such a control at the time of initial charge/discharge, the charge curves **144** and **154** can be made to conform to the charge curve **124** at once. The charge curves **144** and **154** do not move after the charge curves **144** and **154** conform to the charge curve **124.** As the charge curves **144** and **154** no longer move, it is possible to precisely determine SOC from the voltage of the nickel-metal hydride battery **40.**

Such a control as described above is performed on the condition that SOC of the nickel-metal hydride battery **40** at the time of delivery from the battery manufacturer is lower than the upper limit **131** of the use range **130.** Therefore, if the nickel-metal hydride battery **40** is delivered with SOC being higher than the upper limit **131** of the use range **130,** the battery alone is discharged until SOC is 0%, and then the battery is charged so that SOC is lower than the upper limit **131** of the use range **130** before the battery is assembled to a product.

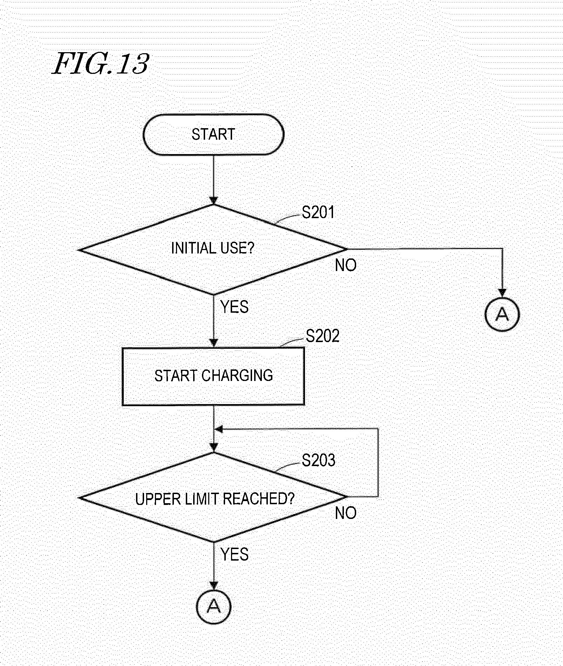

FIG. **13** is a flow chart showing an initial charge/discharge control of the nickel-metal hydride battery **40.**

In step S201, when the nickel-metal hydride battery **40** is to be used, the microcontroller **61** determines whether it is an initial use of the nickel-metal hydride battery **40.** For example, the memory **62** stores charging/discharging history. The microcontroller **61** can determine whether it is an initial use by reading out the history. When it is determined that it is an initial use, the charging of the nickel-metal hydride battery **40** is started (step S202). The charging is continued until reaching the upper limit **131** of the SOC use range **130** (step S203). No discharging is done until reaching the upper limit **131** of the SOC use range **130.** No discharging is done until the nickel-metal hydride battery **40** is charged to the upper limit **131** of the SOC use range **130,** irrespective of the temperature of the nickel-metal hydride battery **40.** When the upper limit **131** of the SOC use range **130** is reached, the charge curves **144** and **154** have changed so as to conform to the charge curve **124.**

Thus, immediately after starting to use the nickel-metal hydride battery **40,** the charge curves **144** and **154** can be made to conform to the charge curve **124.** After such initial charge, the process of changing the SOC use range depending on the temperature shown in FIG. **9** is executed. As the charge curves **144** and **154** do not move, it is possible to precisely determine SOC from the voltage of the nickel-metal hydride battery **40.**

When it is determined in step S201 that it is not an initial use, the process of changing the SOC use range depending on the temperature shown in FIG. **9** is executed.

Although the initial use of the nickel-metal hydride battery **40** is an initial use thereof after being shipped from factory of the nickel-metal hydride battery **40** in the example described above, the initial use may be an initial use after replenishing charging of the nickel-metal hydride battery **40.** The charge curves **144** and **154** can be made to conform to the charge curve **124** immediately after starting to use the nickel-metal hydride battery **40** after replenishing charging. As the charge curves **144** and **154** do not move, it is possible to precisely determine SOC from the voltage of the nickel-metal hydride battery **40** even after replenishing charging.

Note that although SOC is determined by using the battery voltage and the discharge curve in the description above, the present invention is not limited thereto. SOC may be determined by using the cumulative current value output from the nickel-metal hydride battery **40.** Since a control of the nickel-metal hydride battery **40** is influenced by the hysteresis characteristic and the memory effect, the control may be complicated if the process of determining SOC from the voltage is performed as necessary. It is possible to reduce the computational load by estimating SOC using the cumulative current value. Although the error in SOC may become significant when a cumulative current value is used, such an error can be reset at the point where the battery has been charged to the upper limit of the selected SOC use range. This is because the precision of the relationship between voltage and SOC is high when the battery has been charged to the upper limit of the SOC use range. By resetting when the battery has been charged to the upper limit of the SOC use range, it is possible to maintain the precision.

Although three SOC use ranges are selectively used depending on the temperature in the description above, the present invention is not limited thereto. The number of SOC use ranges to be selectively used depending on the temperature may be two or may be four or more.

An illustrative embodiment of the present invention has been described above.

As described above, a battery control system **6** according to the present invention controls the charging/discharging of the nickel-metal hydride battery **40** having a hysteresis characteristic for the relationship between voltage and SOC. The battery control system **6** includes the microcontroller **61** and the memory **62.** The memory **62** stores information regarding a plurality of SOC use ranges **130, 140** and **150** having different SOC upper and lower limits. The microcontroller **61** selects one of the plurality of SOC use ranges **130, 140** and **150,** and controls the charging/discharging of the nickel-metal hydride battery **40** in accordance with the selected SOC use range. The microcontroller **61** receives information regarding the temperature of the nickel-metal hydride battery **40** detected by the temperature sensor **41.** The microcontroller **61** changes the SOC use range to be selected from among the plurality of SOC use ranges **130, 140** and **150** depending on the temperature of the nickel-metal hydride battery **40.**

By changing the SOC use range depending on the temperature of the nickel-metal hydride battery **40,** it is possible to charge/discharge over a wide SOC range. Being able to charge/discharge over a wide SOC range allows to make effective use of the performance of the nickel-metal hydride battery **40.**

In one embodiment, the upper limit **131** of the SOC use range **130** is higher than the upper limit **141** of the SOC use range **140,** and the lower limit **142** of the SOC use range **140** is lower than the lower limit **132** of the SOC use range **130.** The upper limit **141** of the SOC use range **140** is higher than the upper limit **151** of the SOC use range **150,** and the lower limit **152** of the SOC use range **150** is lower than the lower limit **142** of the SOC use range **140.**

By selectively using an SOC use range having a high SOC upper limit and an SOC use range having a low SOC lower limit, it is possible to charge/discharge the nickel-metal hydride battery **40** over a wide SOC range.

In one embodiment, when the temperature of the nickel-metal hydride battery **40** is a first temperature, the microcontroller **61** performs a charge/discharge control in accordance with the SOC use range **130.** When the temperature of the nickel-metal hydride battery **40** is a second temperature higher than the first temperature, the microcontroller **61** performs a charge/discharge control in accordance with the SOC use range **150.**

When the temperature of the nickel-metal hydride battery **40** is low, the battery is charged/discharged over a use range such that SOC does not become too low. On the other hand, when the temperature of the nickel-metal hydride battery **40** is high, the battery is charged/discharged over a use range such that SOC does not become too high. Thus, it is possible to suppress the lowering of the output due to the temperature of the nickel-metal hydride battery **40** being low, and to suppress the lowering of the charging efficiency due to the temperature being high.

When changing the SOC use range from the SOC use range **130** to the SOC use range **150,** the microcontroller **61** performs a control such that the nickel-metal hydride battery **40** is discharged to the lower limit **152** of the SOC use range **150.** When changing the SOC use range from the SOC use range **150** to the SOC use range **130,** the microcontroller **61** performs a control such that the nickel-metal hydride battery **40** is charged to the upper limit **131** of the SOC use range **130.**

When switching to a lower SOC use range, the nickel-metal hydride battery **40** is discharged to the lower limit of the target use range. When switching to a higher SOC use range, the nickel-metal hydride battery **40** is charged to the upper limit of the target use range. Thus, it is possible to change the SOC use range.

In one embodiment, the upper limit **141** of the SOC use range **140** is lower than the upper limit **131** of the SOC use range **130** and higher than the upper limit **151** of the SOC use range **150.** The lower limit **142** of the SOC use range **140** is lower than the lower limit **132** of the SOC use range **130** and higher than the lower limit **152** of the SOC use range **150.**

By selectively using the SOC use ranges **130, 140** and **150,** it is possible to charge/discharge the nickel-metal hydride battery **40** over a wide SOC range.

In one embodiment, when the temperature of the nickel-metal hydride battery **40** is a first temperature, the microcontroller **61** performs a charge/discharge control in accordance with the SOC use range **130.** When the temperature of the nickel-metal hydride battery **40** is a second temperature higher than the first temperature, the microcontroller **61** performs a charge/discharge control in accordance with the SOC use range **150.** When the temperature of the nickel-metal hydride battery **40** is a third temperature higher than the first temperature and lower than the second temperature, the microcontroller **61** performs a charge/discharge control in accordance with the SOC use range **140.** Thus, it is possible to charge/discharge over an SOC use range that is suitable for the temperature of the nickel-metal hydride battery **40.**

In one embodiment, when changing the SOC use range from the SOC use range **130** to the SOC use range **140,** the microcontroller **61** performs a control such that the nickel-metal hydride battery **40** is discharged to the lower limit **142** of the SOC use range **140.** When changing the SOC use range from the SOC use range **140** to the SOC use range **150,** a control is performed such that the nickel-metal hydride battery **40** is discharged to the lower limit **152** of the SOC use range **150.** When changing the SOC use range from the SOC use range **150** to the SOC use range **140,** a control is performed such that the nickel-metal hydride battery **40** is charged to the upper limit **141** of the SOC use range **140.** When changing the SOC use range from the SOC use range **140** to the SOC use range **130,** a control is performed such that the nickel-metal hydride battery **40** is charged to the upper limit **131** of the SOC use range **130.**

When switching to a lower SOC use range, the nickel-metal hydride battery **40** is discharged to the lower limit of the target use range. When switching to a higher SOC use range, the nickel-metal hydride battery **40** is charged to the upper limit of the target use range. Thus, it is possible to change the SOC use range.

In one embodiment, at the time of initial use of the nickel-metal hydride battery **40,** the microcontroller **61** performs a control such that the discharging of the nickel-metal hydride battery **40** is started after the nickel-metal hydride battery **40** is charged to the upper limit **131** of the SOC use range **130.**

By discharging to the lower limit **152** of the SOC use range **150** and charging to the upper limit **131** of the SOC use range **130,** there are obtained the discharge curve **123** and the charge curve **124** (a reference discharge curve and a reference charge curve) that connect between the upper limit **131** of the SOC use range **130** and the lower limit **152** of the SOC use range **150.**

At the time of initial use of the nickel-metal hydride battery **40,** upper portions of the charge curves **144** and **154,** which are obtained when charging in accordance with the SOC use ranges **140** and **150,** are off the reference charge curve **124.** While repeating the control of changing the SOC use range depending on the temperature, the charge curves **144** and **154** move so that upper portions thereof come closer to the reference charge curve **124.** As the charge curves **144** and **154** move, it is difficult to precisely determine SOC from the voltage of the nickel-metal hydride battery **40.**

In view of this, at the time of initial use of the nickel-metal hydride battery **40,** the nickel-metal hydride battery **40** is first charged to the upper limit **131** of the SOC use range **130.** Thus, upper portions of the charge curves **144** and **154** can be made to conform to the reference charge curve **124.** The charge curves **144** and **154** no longer move after upper portions thereof conform to the reference charge curve **124.** As the charge curves **144** and **154** no longer move, it is possible to precisely determine SOC from the voltage of the nickel-metal hydride battery **40.**

In one embodiment, at the time of initial use of the nickel-metal hydride battery **40,** the microcontroller **61** performs a control such that the discharging of the nickel-metal hydride battery **40** is started after the nickel-metal hydride battery **40** is charged to the upper limit **131** of the SOC use range **130,** irrespective of the temperature of the nickel-metal hydride battery **40.**

At the time of initial use of the nickel-metal hydride battery **40,** the nickel-metal hydride battery **40** is first charged to the upper limit **131** of the SOC use range **130,** irrespective of the temperature of the nickel-metal hydride battery **40.** Thus, upper portions of the charge curves **144** and **154** can be made to conform to the reference charge curve **124.** The charge curves **144** and **154** no longer move after upper portions thereof conform to the reference charge curve **124.** As the charge curves **144** and **154** no longer move, it is possible to precisely determine SOC from the voltage of the nickel-metal hydride battery **40.**

In one embodiment, the initial use of the nickel-metal hydride battery **40** is an initial use of the nickel-metal hydride battery **40** after being shipped from factory.

Immediately after starting to use the nickel-metal hydride battery **40,** upper portions of the charge curves **144** and **154** can be made to conform to the reference charge curve **124.** As the charge curves **144** and **154** no longer move, it is possible to precisely determine SOC from the voltage of the nickel-metal hydride battery **40.**

In one embodiment, the initial use of the nickel-metal hydride battery **40** is an initial use thereof after replenishing charging of the nickel-metal hydride battery **40.**

Immediately after starting to use the nickel-metal hydride battery **40** after replenishing charging, upper portions of the charge curves **144** and **154** can be made to conform to the reference charge curve **124.** As the charge curves **144** and **154** no longer move, it is possible to precisely determine SOC from the voltage of the nickel-metal hydride battery **40.**

A straddled vehicle **100** according to an embodiment includes the battery control system **6** described above. Being able to charge/discharge the nickel-metal hydride battery **40** over a wide SOC range allows to improve the performance of the straddled vehicle **100.**

### INDUSTRIAL APPLICABILITY

The present invention is particularly useful in technical fields that involve charging/discharging of a nickel-metal hydride battery.

### REFERENCE SIGNS LIST

1: Body, 2: Front fork, 3: Front wheel, 4: Handle, 5: Seat, 6: ECU (battery control system), 7: Rear wheel, 8: Leg space, 9: Head pipe, 10: Body frame, 11: Piston, 12: Conrod, 13: Crank shaft, 15: Intake valve, 16: Exhaust valve, 17: Cam shaft, 17a: Cam journal, 17b: Cam journal, 18: Ignitor, 19: Injector, 20: Engine, 21: Intake port, 22: Intake passageway, 23: Exhaust port, 24: Exhaust passageway, 25: Combustion chamber, 30: Rotating electrical machine, 31: Stator, 31a: Stator coil, 32: Rotor, 32a: Magnet, 40: Nickel-metal hydride battery, 41: Temperature sensor, 42: Voltage sensor, 43: Current sensor, 61: Microcontroller, 62: Memory, 100: Motorcycle (straddled vehicle), 113: Discharge curve, 114: Charge curve, 120: SOC use range, 121: Upper limit of SOC use range, 122: Lower limit of SOC use range, 123: Discharge curve, 124: Charge curve, 130: SOC use range for low temperature, 131: Upper limit of SOC use range for low temperature, 132: Lower limit of SOC use range for low temperature, 133: Discharge curve, 134: Charge curve, 140: SOC use range for medium temperature, 141: Upper limit of SOC use range for medium temperature, 142: Lower limit of SOC use range for medium temperature, 143: Discharge curve, 144: Charge curve, 150: SOC use range for high temperature, 151: Upper limit of SOC use range for high temperature, 152: Lower limit of SOC use range for high temperature, 153: Discharge curve, 154: Charge curve

## Claims

1. A battery control system (6) for controlling charging/discharging of a nickel-metal hydride battery (40) having a hysteresis characteristic for a relationship between voltage and state of charge SOC, the battery control system comprising:
a memory (62) that stores information regarding a plurality of SOC use ranges (130, 140, 150) having different SOC upper (131, 141, 151) and lower (132, 142, 152) limits; and
a control circuit (61) that is configured to select one of the plurality of SOC use ranges (130, 140, 150), and is configured to control charging/discharging of the nickel-metal hydride battery (40) in accordance with the selected SOC use range (130, 140, 150),
wherein the control circuit (61):
is configured to receive information regarding a temperature of the nickel-metal hydride battery detected by a temperature sensor (41); and
is configured to change an SOC use range (130, 140, 150) to be selected from among the plurality of SOC use ranges (130, 140, 150) depending on the temperature of the nickel-metal hydride battery (40), wherein:
the plurality of SOC use ranges (130, 140, 150) include a first use range (130) and a second use range (150);
an SOC upper limit (131) of the first use range (130) is higher than an SOC upper limit (151) of the second use range (150); and
an SOC lower limit (152) of the second use range (150) is lower than an SOC lower limit (132) of the first use range (130),
and **characterized in that** the control circuit (61):
is configured to perform a control such that the nickel-metal hydride battery (40) is discharged to the SOC lower limit (152) of the second use range (150) when changing the SOC use range from the first use range (130) to the second use range (150); and
is configured to perform a control such that the nickel-metal hydride (40) battery is charged to the SOC upper limit (131) of the first use range (130) when changing the SOC use range from the second use range (150) to the first use range (130).

2. The battery control system (6) according to claim 1, wherein the control circuit (61):
is configured to perform a charge/discharge control in accordance with the first use range (130) when the temperature of the nickel-metal hydride battery (40) is a first temperature; and
is configured to perform a charge/discharge control in accordance with the second use range (140) when the temperature of the nickel-metal hydride battery (40) is a second temperature higher than the first temperature.

3. The battery control system (6) according to claim 1 or 2, wherein:
the plurality of SOC use ranges (130, 140, 150) further include a third use range (140);
an SOC upper limit (141) of the third use range (140) is lower than the SOC upper limit (131) of the first use range (130) and higher than the SOC upper limit (151) of the second use range (150); and
an SOC lower limit (142) of the third use range (140) is lower than the SOC lower limit (132) of the first use range (130) and higher than the SOC lower limit (152) of the second use range (150).

4. The battery control system (6) according to claim 3, wherein the control circuit (61):
is configured to perform a charge/discharge control in accordance with the first use range (130) when the temperature of the nickel-metal hydride battery (40) is a first temperature;
is configured to perform a charge/discharge control in accordance with the second use range (150) when the temperature of the nickel-metal hydride battery (40) is a second temperature higher than the first temperature; and
is configured to perform a charge/discharge control in accordance with the third use range (140) when the temperature of the nickel-metal hydride battery (40) is a third temperature higher than the first temperature and lower than the second temperature.

5. The battery control system (6) according to claim 3 or 4, wherein the control circuit (61):
is configured to perform a control such that the nickel-metal hydride battery (40) is discharged to the SOC lower limit (142) of the third use range (140) when changing the SOC use range from the first use range (130) to the third use range (140);
is configured to perform a control such that the nickel-metal hydride battery (40) is discharged to the SOC lower limit (152) of the second use range (150) when changing the SOC use range from the third use range (140) to the second use range (150);
is configured to perform a control such that the nickel-metal hydride battery (40) is charged to the SOC upper limit (141) of the third use range (140) when changing the SOC use range from the second use range (150) to the third use range (140); and
is configured to perform a control such that the nickel-metal hydride battery (40) is charged to the SOC upper limit (131) of the first use range (130) when changing the SOC use range from the third use range (140) to the first use range (130).

6. The battery control system (6) according to any one of claims 1 to 5, wherein at the time of initial use of the nickel-metal hydride battery (40), the control circuit (61) is configured to perform a control such that discharging of the nickel-metal hydride battery (40) is started after the nickel-metal hydride battery (40) is charged to the SOC upper limit (131) of the first use range (130).

7. The battery control system (6) according to any one of claims 1 to 6, wherein at the time of initial use of the nickel-metal hydride battery (40), the control circuit (61) is configured to perform a control such that discharging of the nickel-metal hydride battery (40) is started after the nickel-metal hydride battery (40) is charged to the SOC upper limit (131) of the first use range (130), irrespective of the temperature of the nickel-metal hydride battery (40).

8. The battery control system (6) according to claim 6 or 7, wherein the initial use of the nickel-metal hydride battery (40) is an initial use of the nickel-metal hydride battery (40) after being shipped from factory.

9. The battery control system (6) according to claim 6 or 7, wherein the initial use of the nickel-metal hydride battery (40) is an initial use of the nickel-metal hydride battery (40) after replenishing charging of the nickel-metal hydride battery (40).

10. A straddled vehicle (100) comprising the battery control system (6) according to any one of claims 1 to 9.

## Patentansprüche

1. Ein Batteriesteuerungssystem (6) zum Steuern des Ladens/Entladens einer Nickel-Metallhydrid-Batterie (40), die eine Hysteresecharakteristik für eine Beziehung zwischen Spannung und Ladezustand SOC aufweist, wobei das Batteriesteuerungssystem umfasst:
einen Speicher (62), der Informationen bezüglich einer Vielzahl von SOC-Verwendungsbereichen (130, 140, 150), die unterschiedliche SOC-Ober- (131, 141, 151) und Untergrenzen (132, 142, 152) aufweisen, speichert; und
eine Steuerungsschaltung (61), die so konfiguriert ist, dass sie einen der Vielzahl von SOC-Verwendungsbereichen (130, 140, 150) auswählt, und die so konfiguriert ist, dass sie das Laden/Entladen der Nickel-Metallhydrid-Batterie (40) in Übereinstimmung mit dem ausgewählten SOC-Verwendungsbereich (130, 140, 150) steuert,
wobei die Steuerungsschaltung (61):
konfiguriert ist, um Informationen bezüglich einer Temperatur der Nickel-Metallhydrid-Batterie zu empfangen, die von einem Temperatursensor (41) detektiert wird; und
konfiguriert ist, um einen SOC-Verwendungsbereich (130, 140, 150) zu ändern, der aus der Vielzahl von SOC-Verwendungsbereichen (130, 140, 150) in Abhängigkeit von der Temperatur der Nickel-Metallhydrid-Batterie (40) auszuwählen ist, wobei:
die Vielzahl von SOC-Verwendungsbereichen (130, 140, 150) einen ersten Verwendungsbereich (130) und einen zweiten Verwendungsbereich (150) enthalten;
eine SOC-Obergrenze (131) des ersten Verwendungsbereichs (130) höher ist als eine SOC-Obergrenze (151) des zweiten Verwendungsbereichs (150); und
eine SOC-Untergrenze (152) des zweiten Verwendungsbereichs (150) niedriger ist als eine SOC-Untergrenze (132) des ersten Verwendungsbereichs (130),
und **dadurch gekennzeichnet, dass** die Steuerungsschaltung (61):
so konfiguriert ist, dass sie eine Steuerung durchführt, so dass die Nickel-Metallhydrid-Batterie (40) auf die SOC-Untergrenze (152) des zweiten Verwendungsbereichs (150) entladen wird, wenn der SOC-Verwendungsbereich von dem ersten Verwendungsbereich (130) zu dem zweiten Verwendungsbereich (150) geändert wird; und
so konfiguriert ist, dass sie eine Steuerung durchführt, so dass die Nickel-Metallhydrid-Batterie (40) bis zur SOC-Obergrenze (131) des ersten Verwendungsbereichs (130) geladen wird, wenn der SOC-Verwendungsbereich von dem zweiten Verwendungsbereich (150) zu dem ersten Verwendungsbereich (130) geändert wird.

2. Das Batteriesteuerungssystem (6) nach Anspruch 1, wobei die Steuerungsschaltung (61):
so konfiguriert ist, dass sie eine Lade-/Entladesteuerung in Übereinstimmung mit dem ersten Verwendungsbereich (130) durchführt, wenn die Temperatur der Nickel-Metallhydrid-Batterie (40) eine erste Temperatur ist; und
so konfiguriert ist, dass sie eine Lade-/Entladesteuerung gemäß dem zweiten Verwendungsbereich (140) durchführt, wenn die Temperatur der Nickel-Metallhydrid-Batterie (40) eine zweite Temperatur ist, die höher als die erste Temperatur ist.

3. Das Batteriesteuerungssystem (6) nach Anspruch 1 oder 2, wobei:
die Vielzahl der SOC-Verwendungsbereiche (130, 140, 150) ferner einen dritten Verwendungsbereich (140) enthalten;
eine SOC-Obergrenze (141) des dritten Verwendungsbereichs (140) niedriger als die SOC-Obergrenze (131) des ersten Verwendungsbereichs (130) und höher als die SOC-Obergrenze (151) des zweiten Verwendungsbereichs (150) ist; und
eine SOC-Untergrenze (142) des dritten Verwendungsbereichs (140) niedriger als die SOC-Untergrenze (132) des ersten Verwendungsbereichs (130) und höher als die SOC-Untergrenze (151) des zweiten Verwendungsbereichs (150) ist.

4. Das Batteriesteuerungssystem (6) nach Anspruch 3, wobei die Steuerungsschaltung (61):
so konfiguriert ist, dass sie eine Lade-/Entladesteuerung in Übereinstimmung mit dem ersten Verwendungsbereich (130) durchführt, wenn die Temperatur der Nickel-Metallhydrid-Batterie (40) eine erste Temperatur ist;
konfiguriert ist, um eine Lade-/Entladesteuerung in Übereinstimmung mit dem zweiten Verwendungsbereich (150) durchzuführen, wenn die Temperatur der Nickel-Metallhydrid-Batterie (40) eine zweite Temperatur ist, die höher als die erste Temperatur ist; und
so konfiguriert ist, dass sie eine Lade-/Entladesteuerung in Übereinstimmung mit dem dritten Verwendungsbereich (140) durchführt, wenn die Temperatur der Nickel-Metallhydrid-Batterie (40) eine dritte Temperatur ist, die höher als die erste Temperatur und niedriger als die zweite Temperatur ist.

5. Das Batteriesteuerungssystem (6) nach Anspruch 3 oder 4, wobei die Steuerungsschaltung (61):
so konfiguriert ist, dass sie eine Steuerung durchführt, so dass die Nickel-Metallhydrid-Batterie (40) bis zur SOC-Untergrenze (142) des dritten Verwendungsbereichs (140) entladen wird, wenn der SOC-Verwendungsbereich von dem ersten Verwendungsbereich (130) zu dem dritten Verwendungsbereich (140) geändert wird;
so konfiguriert ist, dass sie eine Steuerung durchführt, so dass die Nickel-Metallhydrid-Batterie (40) bis zur SOC-Untergrenze (152) des zweiten Verwendungsbereichs (150) entladen wird, wenn der SOC-Verwendungsbereich von dem dritten Verwendungsbereich (140) auf den zweiten Verwendungsbereich (150) geändert wird;
so konfiguriert ist, dass es eine Steuerung durchführt, so dass die Nickel-Metallhydrid-Batterie (40) auf die SOC-Obergrenze (141) des dritten Verwendungsbereichs (140) geladen wird, wenn der SOC-Verwendungsbereich von dem zweiten Verwendungsbereich (150) auf den dritten Verwendungsbereich (140) geändert wird; und
so konfiguriert ist, dass es eine Steuerung durchführt, so dass die Nickel-Metallhydrid-Batterie (40) auf die SOC-Obergrenze (131) des ersten Verwendungsbereichs (130) geladen wird, wenn der SOC-Verwendungsbereich von dem dritten Verwendungsbereich (140) auf den ersten Verwendungsbereich (130) geändert wird.

6. Das Batteriesteuerungssystem (6) nach einem der Ansprüche 1 bis 5, wobei zum Zeitpunkt der anfänglichen Verwendung der Nickel-Metallhydrid-Batterie (40) die Steuerungsschaltung (61) so konfiguriert ist, dass sie eine Steuerung durchführt, so dass das Entladen der Nickel-Metallhydrid-Batterie (40) begonnen wird, nachdem die Nickel-Metallhydrid-Batterie (40) auf die SOC-Obergrenze (131) des ersten Verwendungsbereichs (130) geladen ist.

7. Das Batteriesteuerungssystem (6) nach einem der Ansprüche 1 bis 6, wobei zum Zeitpunkt der anfänglichen Verwendung der Nickel-Metallhydrid-Batterie (40) die Steuerungsschaltung (61) so konfiguriert ist, dass sie eine Steuerung durchführt, so dass das Entladen der Nickel-Metallhydrid-Batterie (40) begonnen wird, nachdem die Nickel-Metallhydrid-Batterie (40) bis zur SOC-Obergrenze (131) des ersten Verwendungsbereichs (130) geladen ist, unabhängig von der Temperatur der Nickel-Metallhydrid-Batterie (40).

8. Das Batteriesteuerungssystem (6) nach Anspruch 6 oder 7, wobei die anfängliche Verwendung der Nickel-Metallhydrid-Batterie (40) eine anfängliche Verwendung der Nickel-Metallhydrid-Batterie (40) nach der Auslieferung ab Werk ist.

9. Das Batteriesteuerungssystem (6) nach Anspruch 6 oder 7, wobei die anfängliche Verwendung der Nickel-Metallhydrid-Batterie (40) eine anfängliche Verwendung der Nickel-Metallhydrid-Batterie (40) nach dem Auffüllladen der Nickel-Metallhydrid-Batterie (40) ist.

10. Ein gespreiztes Fahrzeug (100) umfassend das Batteriesteuerungssystem (6) nach einem der Ansprüche 1 bis 9.

## Revendications

1. Système de contrôle de batterie (6) pour contrôler la charge/décharge d'une batterie nickel-hydrure métallique (40) ayant une caractéristique d'hystérésis pour une relation entre la tension et l'état de charge, SOC - State Of Charge, le système de contrôle de batterie comprenant :
une mémoire (62) qui stocke de l'information concernant une pluralité de plages d'utilisation de SOC (130, 140, 150) ayant différentes limites SOC supérieures (131, 141, 151) et inférieures (132, 142, 152) ; et
un circuit de contrôle (61) configuré pour sélectionner une plage de la pluralité de plages d'utilisation de SOC (130, 140, 150), et configuré pour contrôler la charge/décharge de la batterie nickel-hydrure métallique (40) conformément à la plage d'utilisation de SOC sélectionnée (130, 140, 150),
dans lequel le circuit de contrôle (61) :
est configuré pour recevoir de l'information concernant une température de la batterie nickel-hydrure métallique détectée par un capteur de température (41) ; et
est configuré pour modifier une plage d'utilisation de SOC (130, 140, 150) à sélectionner parmi la pluralité de plages d'utilisation de SOC (130, 140, 150) en fonction de la température de la batterie nickel-hydrure métallique (40), dans lequel :
la pluralité de plages d'utilisation de SOC (130, 140, 150) comprend une première plage d'utilisation (130) et une deuxième plage d'utilisation (150) ;
une limite supérieure de SOC (131) de la première plage d'utilisation (130) est supérieure à une limite supérieure de SOC (151) de la deuxième plage d'utilisation (150) ; et
une limite inférieure de SOC (152) de la deuxième plage d'utilisation (150) est inférieure à une limite inférieure de SOC (132) de la première plage d'utilisation (130),
et **caractérisé en ce que** le circuit de contrôle (61) est configuré pour mettre en oeuvre :
un contrôle de telle sorte que la batterie nickel-hydrure métallique (40) est déchargée jusqu'à la limite inférieure de SOC (152) de la deuxième plage d'utilisation (150) lors du changement de la plage d'utilisation de SOC de la première plage d'utilisation (130) à la deuxième plage d'utilisation (150) ; et
un contrôle de telle sorte que la batterie nickel-hydrure métallique (40) est chargée jusqu'à la limite supérieure de SOC (131) de la première plage d'utilisation (130) lors du changement de la plage d'utilisation de SOC de la deuxième plage d'utilisation (150) à la première plage d'utilisation (130).

2. Système de contrôle de batterie (6) selon la revendication 1, dans lequel le circuit de contrôle (61) est configuré pour mettre en oeuvre :
un contrôle de charge/décharge conformément à la première plage d'utilisation (130) quand la température de la batterie nickel-hydrure métallique (40) est une première température ; et
un contrôle de charge/décharge conformément à la deuxième plage d'utilisation (140) quand la température de la batterie nickel-hydrure métallique (40) est une deuxième température supérieure à la première température.

3. Système de contrôle de batterie (6) selon la revendication 1 ou 2, dans lequel :
la pluralité de plages d'utilisation de SOC (130, 140, 150) comprend en outre une troisième plage d'utilisation (140) ;
une limite supérieure de SOC (141) de la troisième plage d'utilisation (140) est inférieure à la limite supérieure de SOC (131) de la première plage d'utilisation (130) et supérieure à la limite supérieure de SOC (151) de la deuxième plage d'utilisation (150) ; et
une limite inférieure de SOC (142) de la troisième plage d'utilisation (140) est inférieure à la limite inférieure de SOC (132) de la première plage d'utilisation (130) et supérieure à la limite inférieure de SOC (152) de la deuxième plage d'utilisation (150).

4. Système de contrôle de batterie (6) selon la revendication 3, dans lequel le circuit de contrôle (61) est configuré pour mettre en oeuvre :
un contrôle de charge/décharge conformément à la première plage d'utilisation (130) quand la température de la batterie nickel-hydrure métallique (40) est une première température ;
un contrôle de charge/décharge conformément à la deuxième plage d'utilisation (150) quand la température de la batterie nickel-hydrure métallique (40) est une deuxième température supérieure à la première température ; et
un contrôle de charge/décharge conformément à la troisième plage d'utilisation (140) quand la température de la batterie nickel-hydrure métallique (40) est une troisième température supérieure à la première température et inférieure à la deuxième température.

5. Système de contrôle de batterie (6) selon la revendication 3 ou 4, dans lequel le circuit de contrôle (61) est configuré pour mettre en oeuvre :
un contrôle de telle sorte que la batterie nickel-hydrure métallique (40) est déchargée jusqu'à la limite inférieure de SOC (142) de la troisième plage d'utilisation (140) lors du changement de la plage d'utilisation de SOC de la première plage d'utilisation (130) à la troisième plage d'utilisation (140) ;
un contrôle de telle sorte que la batterie nickel-hydrure métallique (40) est déchargée jusqu'à la limite inférieure de SOC (152) de la deuxième plage d'utilisation (150) lors du changement de la plage d'utilisation de SOC de la troisième plage d'utilisation (140) à la deuxième plage d'utilisation (150) ;
un contrôle de telle sorte que la batterie nickel-hydrure métallique (40) est chargée jusqu'à la limite supérieure de SOC (141) de la troisième plage d'utilisation (140) lors du changement de la plage d'utilisation de SOC de la deuxième plage d'utilisation (150) à la troisième plage d'utilisation (140) ; et
un contrôle de telle sorte que la batterie nickel-hydrure métallique (40) est chargée jusqu'à la limite supérieure de SOC (131) de la première plage d'utilisation (130) lors du changement de la plage d'utilisation de SOC de la troisième plage d'utilisation (140) à la première plage d'utilisation (130).

6. Système de contrôle de batterie (6) selon l'une quelconque des revendications 1 à 5, dans lequel, au moment de l'utilisation initiale de la batterie nickel-hydrure métallique (40), le circuit de contrôle (61) est configuré pour mettre en œuvre un contrôle de telle sorte que la décharge de la batterie nickel-hydrure métallique (40) est démarrée après que la batterie nickel-hydrure métallique (40) a été chargée jusqu'à la limite supérieure de SOC (131) de la première plage d'utilisation (130).

7. Système de contrôle de batterie (6) selon l'une quelconque des revendications 1 à 6, dans lequel, au moment de l'utilisation initiale de la batterie nickel-hydrure métallique (40), le circuit de contrôle (61) est configuré pour mettre en œuvre un contrôle de telle sorte que la décharge de la batterie nickel-hydrure métallique (40) est démarrée après que la batterie nickel-hydrure métallique (40) a été chargée jusqu'à la limite supérieure de SOC (131) de la première plage d'utilisation (130), quelle que soit la température de la batterie nickel-hydrure métallique (40).

8. Système de contrôle de batterie (6) selon la revendication 6 ou 7, dans lequel l'utilisation initiale de la batterie nickel-hydrure métallique (40) est une utilisation initiale de la batterie nickel-hydrure métallique (40) après son expédition depuis l'usine.

9. Système de contrôle de batterie (6) selon la revendication 6 ou 7, dans lequel l'utilisation initiale de la batterie nickel-hydrure métallique (40) est une utilisation initiale de la batterie nickel-hydrure métallique (40) après la recharge de la batterie nickel-hydrure métallique (40).

10. Véhicule à enfourcher (100) comprenant le système de contrôle de batterie (6) selon l'une quelconque des revendications 1 à 9.
